# EUROPEAN PATENT APPLICATION

(11) **EP 4 344 306 A1**
(43) Date of publication of application: **27.03.2024**
(21) Application number: 22803592.9
(22) Date of filing: 24.02.2022
(51) Int. Cl.: H04W 48/16, H04W 76/14

(54) **WIFI P2P CONNECTION METHOD AND APPARATUS, AND MOBILE TERMINAL AND STORAGE MEDIUM**

(30) Priority: 17.05.2021 CN 202110538024
(71) Applicant: Tcl Communications (Ningbo) Co., Ltd., Ningbo, Zhejiang 315040 (CN)
(72) Inventor: YANG, Wei, Ningbo, Zhejiang 315040 (CN); WU, Donghai, Ningbo, Zhejiang 315040 (CN); HUANG, Wenlong, Ningbo, Zhejiang 315040 (CN); CHEN, Guifu, Ningbo, Zhejiang 315040 (CN); WU, Xiaoqi, Ningbo, Zhejiang 315040 (CN)
(74) Representative: Petraz, Gilberto Luigi
(86) International application number: PCT/CN2022/077659
(87) International publication number: WO 2022/242262

(57) **Abstract**

Disclosed in the present application are a WiFi P2P connection method and apparatus, and a mobile terminal and a storage medium. The method comprises: receiving an operating channel value of a master device; performing single-channel scanning on the master device according to the received operating channel value, so as to obtain a scanning result; and establishing a WiFi P2P connection with the master device according to the scanning result. The time needed for a slave device to find a master device by means of scanning can be shortened, and the probability of the slave device finding the master device by means of scanning can also be increased, thereby facilitating the establishment of a WiFi P2P data connection channel between different devices.

## Description

This application claims priority to Chinese Patent Application No. 202110538024.2, filed on May 17, 2021, entitled "WIFI P2P CONNECTION METHOD AND APPARATUS, AND MOBILE TERMINAL AND STORAGE MEDIUM", the disclosure of which is incorporated herein by reference in its entirety.

### TECHNICAL FIELD

The present application relates to the field of data transmission technologies, and more particularly, to a WiFi Peer to Peer (P2P) connection method and apparatus, a mobile terminal, and a storage medium.

### BACKGROUND

To improve audio-visual experience, more and more users prefer to project the screen of an electronic product onto a large-screen electronic product (e.g., a smart television) for presentation. The data bearing of many screen projection applications is the WiFi P2P connection, which is used as the basis of the screen projection applications. In addition, the WiFi P2P is widely used in a field, such as file sharing.

In the related art, a native scan Application Program Interface (API) is discoverPeers in an Android system, which may last two minutes. The scan of the API is divided into two phases, i.e., a first phase and a second phase. The first phase is to scan a full frequency band (including 2.4 GHz and 5 GHz) and may last several seconds. The second phase is to scan a Social frequency band, which refers to the first, sixth, and eleventh bands operating at 2.4 GHz. Although the API of the discoverPeers may last two minutes, the frequency band of the 5 GHz may be scanned for only a few seconds of the first phase, and if no peer device (a master device) operating at the 5 GHz is scanned for for the seconds, the scan will fail because the second phase will only scan the 2.4 GHz. Since operation at 5 GHz has a higher rate than operation at 2.4 GHz, it is generally a good practice to establish the WiFi P2P connection on 5 GHz. However, if a terminal (a slave device) does not scan for the peer device (the master device) of 5 GHz at the first stage of the scan, the WiFi P2P connection cannot be established, which results in screen projection failure, and the probability that the terminal scans for the peer device is lower.

Accordingly, the present application provides a WiFi P2P connection method and apparatus, a mobile terminal, and a storage medium for solving the above problems.

### SUMMARY

### TECHNICAL PROBLEMS

When the WiFi P2P connection is established at the 5 GHz, if the terminal (the slave device) does not scan for the peer device (the master device) of the 5 GHz at the first stage of the scan, the WiFi P2P connection cannot be established, which results in screen projection failure, and the probability that the terminal scans for the peer device is lower.

### SOLUTIONS TO PROBLEMS

### TECHNICAL SOLUTIONS

In a first aspect, the present application provides a WiFi P2P connection method, including:
receiving an operation channel value for operation of a master device;
performing single channel scan on the master device according to the received operation channel value, to obtain a scan result; and
establishing a WiFi P2P connection with the master device according to the scan result.

In an implementation, the receiving of the operation channel value may include:
receiving an operation channel value for operation of the master device via a Bluetooth Serial Port Profile (SPP) technology.

In an implementation, the receiving of the operation channel value for operation of the master device via the Bluetooth SPP technology may include:
establishing a Bluetooth SPP channel connection with the master device; and
receiving the operation channel value transmitted by the master device via the Bluetooth SPP channel, where the operation channel value is an operation channel value for Group operating at 5 GHz that the master device creates.

In an implementation, the performing of the single channel scan may include:
performing a single channel scan on the master device for a preset time range controlled by a timer according to the received operation channel value, to obtain a scan result.

In an implementation, the performing of the single channel scan on the master device for the preset time range may include:
starting the timer by which single channel scan time is set; and
performing the single channel scan on the master device for the single channel scan time according to the received operation channel value.

In an implementation, the performing of the single channel scan on the master device for the single channel scan time may further include:
performing the single channel scan for the single channel scan time according to the received operation channel value and a preset threshold value of the number of the single channel scans, where every time one of the single channel scans is performed, the number of the single channel scans is incremented by one, and the single channel scan is stopped when the number of the single channel scans reaches the threshold value.

In an implementation, the establishing of the WiFi P2P connection with the master device according to the scan result may include:
transmitting a WiFi P2P connection request to the master device when the scan result indicates that the master device is searched for; and
confirming the WiFi P2P connection transmitted by the master device to establish the WiFi P2P connection with the master device.

In a second aspect, the present application provides a WiFi P2P connection apparatus, including:
an operation channel value receiving module for receiving an operation channel value for operation of a master device;
a single channel scan module for performing single channel scan on the master device according to the received operation channel value, to obtain a scan result; and
a WiFi P2P connection module for establishing a WiFi P2P connection with the master device according to the scan result.

In a third aspect, the present application provides a mobile terminal, including: a memory, a processor, and an SPP protocol-based WiFi P2P connection program stored on the memory and operable on the processor, where the SPP protocol-based WiFi P2P connection program, when executed by the processor, implements steps of any of the WiFi P2P connection methods described above.

In a fourth aspect, the present application provides a computer-readable storage medium having stored thereon an SPP protocol-based WiFi P2P connection program, where the SPP protocol-based WiFi P2P connection program, when executed by a processor, implements the steps of any of the WiFi P2P connection methods described above.

### BENEFICIAL EFFECTS OF INVENTION

### BENEFICIAL EFFECTS

According to the WiFi P2P connection method provided in the present application, by receiving the operation channel value for the master device, further performing the single channel scan on the master device, and finally establishing the WiFi P2P connection with the master device, the WiFi P2P connection method provided in the present application can directly scan for the master device according to the operation channel, so that the time for scanning for the master device can be shortened, and the probability of scanning for the master device can be increased.

Further embodiments of the present application are capable of achieving other advantageous technical effects not listed one by one, which may be partially described hereinafter, and which will be expected and understood by those skilled in the art upon reading the present application. The content of the present application is intended to introduce, in a simplified form, the concepts and options that will be further described below in the context of the "Detailed Description" in order to help the reader to better understand the present application. The content of the present application is not intended to identify key features or essential features of the claimed subject matter, nor is it intended to limit the scope of the claimed subject matter. All of the above features are to be understood as exemplary only, and further features and objects relating to structures and methods may be gathered from the present disclosure. A more complete display of the features, details, applicability, and advantages of the present application will be provided in the following written description of various embodiments of the present application, illustrated in the accompanying drawings, and defined in the appended claims. Therefore, many limiting explanations of the contents of this application cannot be understood without further reading the entire description and the claims and drawings.

### BRIEF DESCRIPTION OF THE DRAWINGS

### DESCRIPTION OF THE DRAWINGS

Technical solutions and their beneficial effects of the present application are apparent below from detailed description of the embodiments of the present application in combination with the accompanying drawings.
FIG. 1 is a flowchart of specific steps of a WiFi P2P connection method according to the present application.
FIG. 2 is a flowchart of specific steps of a step S01 in FIG. 1.
FIG. 3 is a flowchart of specific steps of a step S02 in FIG. 1.
FIG. 4 is a block diagram showing the structure of a WiFi P2P connection apparatus according to the present application.
FIG. 5 is a block diagram showing the structure of a mobile terminal according to the present application.

### EMBODIMENTS OF INVENTION

### DETAILED DESCRIPTION

To make the objectives, technical solutions, and advantages of the present application more clear and definite, the present application is illustrated in detail below by referring to the accompanying drawings and illustrating the embodiments. It should be understood that the specific implementations described here are only used to explain the present application, and are not used to limit the present application.

Those skilled in the art can understand that, as used herein, the singular forms "a", "an", "said" and "the" may include the plural forms as well, unless expressly stated otherwise. It should be further understood that the word "comprise" when used in this specification is taken to specify the presence of the features, integers, steps, operations, elements, and/or components, but does not preclude the presence or addition of one or more other features, integers, steps, operations, elements, components, and/or combination thereof. It should be understood that when an element is referred to as being "connected" or "coupled" to another element, it can be directly connected or coupled to the other element or an intervening element may also be present. Furthermore, "connected" or "coupled" as used herein may include wireless connection or wireless coupling. As used herein, the phrase "and/or" includes all or any element and all combinations of one or more of the associated listed items.

In the description of embodiments of the present application, it should be illustrated that orientations or position relationships indicated by the terms "center", "upper", "lower", "left", "right", "vertical", "horizontal", "inside", "outside" are based on orientations or position relationships illustrated in the drawings. The terms are used to facilitate and simplify the description of the embodiments of the present application, rather than indicate or imply that the devices or elements referred to herein are required to have specific orientations or be constructed or operate in the specific orientations. Accordingly, the terms should not be construed as limiting the embodiments of the present application. In addition, the term "first", "second", and "third" are for illustrative purposes only and are not to be construed as indicating or imposing a relative importance.

In the description of the embodiments of the present application, it should be illustrated that the terms "installation", "connection" and "coupling" should be understood in a broad sense, unless otherwise clearly specified and defined. For example, it can be a fixed connection, a detachable connection, or integrated connection; it can be a mechanical connection, or an electrical connection; it can be directly connected or indirectly connected through an intermediary, it can also be the connection between two elements. Those ordinary skilled in the art can understand the specific meanings of the above terms in the embodiments of the present application according to specific situations.

The present application will be described below in more detail with reference to several specific embodiments of the present application, in conjunction with the accompanying drawings. It should be illustrated that features among the embodiments in the present application may be combined with each other without conflict.

Screen projection applications may be very popular, and the data bearing of many screen projection applications is the WiFi P2P connection, which is used as the basis of the screen projection applications. A WiFi device may operate in either a 5G frequency band or a 2.4G frequency band, and the data transmission rate operating in the 5G band is faster than the data transmission rate operating in the 2.4G band.

The WiFi P2P technology, also known as Wi-Fi Direct, is a member of the WiFi technology family. The Wi-Fi Direct standard is a standard that allows devices in a wireless network to be connected to each other without passing through a router. This standard allows the wireless devices to be interconnected in a point-to-point manner, with a significant increase in transmission speed and transmission distance over Bluetooth. In P2P connections, devices have two roles: Go and Client. It can be simply understood that Go refers to a master device and the Client refers to a slave device, when a P2P operation is performed, the GO and the Client may be used to form a Group, where the Group is divided into two types: Persist Group and Tempory Group. In the Persist Group, the GO is played by the designated device, and the security configuration information and the Group-related information are not changed subsequently once generated. In subsequent use, the connection time can be greatly reduced by directly utilizing the information. In the Temporary Group, the role assignment of the Go and the Client is determined by the Group Formation and is the result of the negotiation between the two parties. The information of the Temporary Group is temporary, and the Temporary Group is created temporarily in each subsequent use of the information, and the connection time of Temporary Group is greater than that of the Persist Group.

Generally, a terminal needs to initiate a scan on a peer device before establishing a connection with the peer device. When the terminal scans for the peer device, the terminal can initiate the WiFi P2P connection. If the terminal can quickly scan for the peer device, the user experience can be greatly improved. However, the native scan API is discoverPeers in the Android system, which may last two minutes. The scan of the API is divided into two phases, i.e., a first phase and a second phase. The first phase is to scan the full frequency band (including 2.4 GHz and 5 GHz) and may last several seconds. The second phase is to scan the Social frequency band, which refers to the 1, 6, and 11 bands at 2.4 GHz of operation.

In the Android system, the log related to the full frequency band scan is as follows:
D wpa_supplicant: nl80211: D wpa_supplicant: 2412 2417 2422 2427 2432 2437 2442 2447 2452 2457 2462 5180 5200 5220 5240 5260 5280 5300 5320 5500 5520 5540 5560 5580 5600 5620 5640 5660 5680 5700 5720 5745 5765 5785 5805 5825.

It can be seen for a few seconds that the terminal (the slave device) may scan multiple channels of 2.4 GHz and 5 GHz. Since operation at 5 GHz has a higher rate than operation at 2.4 GHz, it is generally good practice to establish a WiFi P2P connection at 5 GHz. The 5.0 GHz is a high frequency channel band with larger bandwidth and better stability. It is not easy for multiple peripheral devices to be disconnected from the 5.0 GHz when the multiple peripheral devices have access to the 5.0 GHz, but wall-penetrating capability of the 5.0 GHz is weaker than that of the 2.4 GHz. This results in a problem. Although the discoverPeers may last two minutes, the frequency band of the 5 GHz may be scanned for only a few seconds of the first phase, and if no peer device (the master device) operating at the 5 GHz is scanned for the seconds, the scan will fail because the second phase will only scan for a peer device (the master device) operating at the 2.4 GHz. If the terminal (the slave device) does not scan for the peer device (the master device) at the first stage of the scan, the WiFi P2P connection cannot be established, which results in screen projection failure, and the probability that the terminal scans for the peer device is lower.

Accordingly, in order to solve the above problems, the present application provides a WiFi P2P connection method and apparatus, a mobile terminal, and a storage medium. The WiFi P2P connection method may include:
receiving an operation channel value for operation of a master device;
performing single channel scan on the master device according to the received operation channel value, to obtain a scan result; and
establishing a WiFi P2P connection with the master device according to the scan result.

The WiFi P2P connection method can receive the operation channel value for the master device, further perform the single channel scan on the master device, and finally establish the WiFi P2P connection with the master device. The WiFi P2P connection method provided in the present application can directly scan for the master device according to the operation channel, so that the time for scanning for the master device can be shortened, and the probability of scanning for the master device can be increased.

### Exemplary method

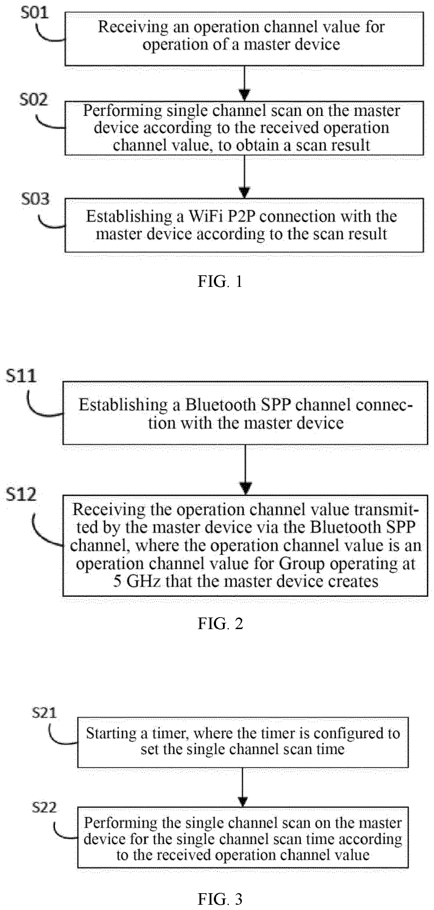

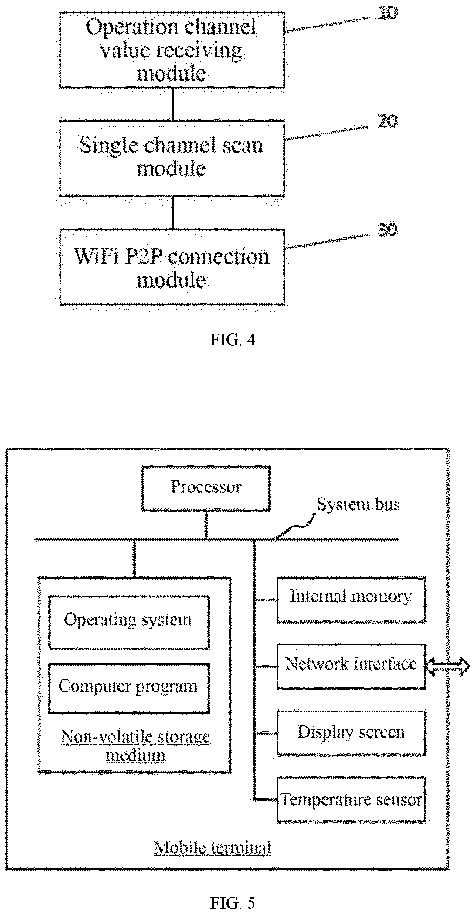

Please refer to FIGS. 1-6, where, FIG. 1 is a flowchart of specific steps of a WiFi P2P connection method according to the present application, FIG. 2 is a flowchart of specific steps of a step S01 in FIG. 1, FIG. 3 is a flowchart of specific steps of a step S02 in FIG. 1, FIG. 4 is a block diagram showing the structure of a WiFi P2P connection apparatus according to the present application, and FIG. 5 is a block diagram showing the structure of a mobile terminal according to the present application.

Please specifically refer to FIG. 1, which is a flowchart of specific steps of a WiFi P2P connection method according to the present application. The WiFi P2P connection method of the embodiment of the present application can includes following steps S01-S03.

At step S01, an operation channel value for operation of a master device may be received.

In the present embodiment, the problem to be solved by the present embodiment is that if the slave device does not scan for the master device at the first stage of the scan, the WiFi P2P connection cannot be established, which results in the screen projection failure, and the probability of the slave device scans for the master device is lower. Therefore, this step can facilitate subsequent scan steps by the master device directly transmitting the operation channel value for operation of the master device to enable the slave device to receive the operation channel value. In a P2P connection, devices have two roles: GO and Client. It can be understood that the GO refers to the master device and the Client refers to the slave device. In a P2P operation, the GO and the Client may be used to form a Group. In one embodiment, the master device is a smart television and the slave device is a smartphone.

In an implementation, the step S01 may be specifically implemented by receiving an operation channel value for operation of the master device via a Bluetooth SPP technology. Further, please refer to FIG. 2, the step S01 can be specifically implemented by following steps S11-S12.

At step S11, a Bluetooth SPP channel connection with the master device may be established.

At step S 12, the operation channel value transmitted by the master device via the Bluetooth SPP channel may be received, where the operation channel value is an operation channel value for Group operating at 5 GHz that the master device creates.

In the Bluetooth technology, the SPP protocol (where SPP is an abbreviated form of Serial Port Profile, and the SPP protocol refers to a serial port profile) is commonly used. The Bluetooth serial port is a device capable of creating a serial port between Bluetooth devices for data transmission based on the SPP protocol (Serial Port Profile). The SPP protocol may establish a virtual serial port between two Bluetooth-enabled devices via which the two Bluetooth-enabled devices may communicate data. The purpose of the Bluetooth serial port is to ensure a complete communication path between applications on two different devices (both ends of the communication). In the SPP protocol, the Bluetooth devices are divided into a Server side and a Client side. In the SPP application, the server side waits for being passively connected with another Bluetooth device, while the Client side is actively connected with a server device. In the present application, the peer device (the master device) acts as the server side, while the terminal (the slave device) acts as the Client side. In the present embodiment, a Bluetooth SPP connection is used between the master device and the slave device to ensure a complete communication path between the slave device and the master device.

In step S12, specifically, the master device firstly creates the Group operating at the 5 GHz, where the master device acts as the Go in the Group, and the slave device acts as the Client in the Group. Operation at 5 GHz has a higher rate than operation at 2.4 GHz. Additionally, if both Bluetooth and WiFi use the 2.4 GHz frequency band, which may interfere with each other, and if the 5 GHz frequency band is used for the WiFi, it may not interfere with the Bluetooth. Therefore, in the present setting, the Group created by the master device is operated at the 5G frequency band to facilitate subsequent establishment of the WiFi P2P connection on the 5 GHz, so that the WiFi P2P is operated at a higher rate than at the 2.4 GHz frequency band. Then, the master device transmits the operation channel value for the Group operating at the 5 GHz and created by the master device to the slave device via the Bluetooth SPP, and the slave device receives the operation channel value and performs subsequent scan.

At step S02, single channel scan may be performed on the master device according to the received operation channel value, to obtain a scan result.

In the present embodiment, since the slave device has received the operation channel value transmitted by the master device, in the subsequent scan process of the slave device, the slave device only needs to perform single channel scan according to the received operation channel value, so that the number of the scanned channel is reduced, the master device is quickly scanned for, and the probability of successfully scanning for the master device is increased. Therefore, the WiFi P2P connection between the master device and the slave device may be quickly established. Alternatively, the single channel scan is performed by a timer mechanism for setting the time of each single channel scan.

Specifically, in some embodiments, please refer to FIG. 3, step S02 may be specifically implemented by following steps S21-S22.

At step S21, a timer may be started, where the timer may be used to set single channel scan time.

At step S22, the single channel scan may be performed on the master device for the single channel scan time according to the received operation channel value.

In the present embodiment, by setting the timer in the slave device to control the scan time of the slave device, a plurality of single channel scans can be performed in a short time, thereby avoiding such a case that the entire process for the WiFi P2P connection needs to be performed again due to failure of the one single channel scan, and accelerating the efficiency for the WiFi P2P connection.

In an implementation, the step S22 may be specifically implemented by following step S221.

At step S221, the single channel scan may be performed for the single channel scan time according to the received operation channel value and a preset threshold value of the number of single channel scans, where every time one of the single channel scans is performed, the number of the single channel scans is incremented by one, and the single channel scan is stopped when the number of the single channel scans reaches the threshold value.

In the present embodiment, the threshold value of the number of single channel scans, i.e., the maximum number of single channel scans, may be set to 10 times or other values, and time for each single channel scan may be set to 4 seconds or other value and controlled by the timer. Every time one of the single channel scans is performed, the number of the single channel scans is incremented by one. If the slave device has scanned for the master device or the number of the single channel scans has reached the threshold value of the number, the single channel scan may be terminated. In the present embodiment, if the maximum number of single channel scans is set to 10, and the time for each single channel scan is set to 4s, the maximum scan time of the slave device is set to 40s. The timer may enable the slave device to perform multiple single channel scans for the single channel scan time, thereby improving the probability that the slave device successfully scans for the master device.

At step S03, a WiFi P2P connection with the master device may be established according to the scan result.

In some implementations, specifically, when the slave device searches for the master device for the single channel scan time, a WiFi P2P connection request is transmitted to the master device. The slave device receives a WiFi P2P connection acknowledgement transmitted by the master device, and a WiFi P2P connection between the slave device and the master device may be established. When the slave device does not search for the master device for the single channel scan time, the WiFi P2P scan process is restarted to retry to scan for the master device.

In the embodiment, by the slave device receiving the operation channel value for operation of the master device by the slave device, further performing the single channel scan, and finally establishing the WiFi P2P connection with the master device, the WiFi P2P connection method provided in the present application can shorten the time for the slave device scanning for the master device, and can further improve the probability for the slave device scanning for the master device. Further, the Bluetooth SPP technology provided in the present embodiment can establish a complete communication path between the master device and the slave device. The master device creates the Group operating at 5 GHz, which is capable of establishing the WiFi P2P connection at 5 GHz, such that the WiFi P2P is operated at a higher rate than in the 2.4 GHz frequency band. The use of the timer in single channel scan can perform multiple single channel scans in a short time, so that failure of one single channel scan is avoided.

### Exemplary apparatus

As shown in FIG. 4, which is a block diagram of the structure of a WiFi P2P connection apparatus according to the present application. The present application further provides a WiFi P2P connection apparatus, including: an operation channel value receiving module 10, a single channel scan module 20, and a WiFi P2P connection module 30. Specifically, the operation channel value receiving module 10 is configured to receive an operation channel value for a master device, the single channel scan module 20 is configured to perform single channel scan on the master device according to the received operation channel value to obtain a scan result, the WiFi P2P connection module 30 is configured to establish a WiFi P2P connection with the master device according to the scan result.

In an implementation, the single channel scan module 20 further includes a timer unit for setting single channel scan time. Specifically, the timer unit may set a maximum number of single channel scans, that is, a threshold value of the number, which may be set to 10 times or other value in the present embodiment, and time for each single channel scan may be set to 4 seconds or other value and controlled by the timer. Every time one of the single channel scans is performed, the number of the single channel scans is incremented by one. If the slave device has scanned for the master device or the number of the single channel scans has reached the threshold value of the number, the single channel scan may be terminated.

Based on the above embodiments, the present application further provides a mobile terminal, which is shown in FIG. 5 and includes a processor, a memory, a network interface, a display screen, and a temperature sensor connected via a system bus. The processor of the mobile terminal is configured to provide computing and control capabilities. The memory of the mobile terminal includes a non-volatile storage medium and an internal memory. The non-volatile storage medium stores an operating system and a computer program. The internal memory provides an environment for the operation of the operating system and the computer program in the non-volatile storage medium. The network interface of the mobile terminal is configured to be in communication with an external terminal via a network connection. The computer program, when executed by the processor, implements a WiFi P2P connection method. The display screen of the mobile terminal may be a liquid crystal display screen or an electronic ink display screen, and the temperature sensor of the mobile terminal is provided inside the mobile terminal in advance for detecting the operation temperature of the internal device.

It should be understood by those skilled in the art that the schematic structural diagram shown in Fig. 5 is merely a block diagram of a portion of the structure associated with the solution of the present application and does not constitute a definition of the mobile terminal to which the solution of the present application is applied. A particular mobile terminal may include more or fewer components than shown, or some combination of components, or have different arrangements of components.

In an embodiment, a mobile terminal is provided, including: a memory, a processor, and an SPP protocol-based WiFi P2P connection program stored on the memory and operable on the processor, where the SPP protocol-based WiFi P2P connection program, when executed by the processor, implements operation instructions including:
receiving an operation channel value for operation of a master device;
performing single channel scan on the master device according to the received operation channel value, to obtain a scan result; and
establishing a WiFi P2P connection with the master device according to the scan result.

It should be understood by those of ordinary skill in the art that all or a portion of the flows of implementing the methods of the embodiments described above may be accomplished by a computer program instructing relevant hardware that may be stored in a non-volatile computer-readable storage medium that, when executed, may include the flows of the method embodiments described above. Any reference to memory, storage, database or other medium used in the embodiments provided in the present application may include non-volatile and/or volatile memory. The non-volatile memory may include read only memory (ROM), programmable ROM (PROM), electrically programmable ROM (EPROM), electrically erasable programmable ROM (EEPROM), or flash memory. The volatile memory may include random access memory (RAM) or external cache memory. By way of illustration and not limitation, the RAM may be available in a variety of forms, such as static RAM (SRAM), dynamic RAM (DRAM), synchronous DRAM (SDRAM), double data rate SDRAM (DDRSDRAM), enhanced SDRAM (ESDRAM), synchronous link (Synchlink) DRAM (SLDRAM), memory bus (Rambus), RAM (RDRAM), direct memory bus dynamic RAM (DRDRAM), and memory bus dynamic RAM (RDRAM).

In summary, the WiFi P2P connection method provided in the present application can receive, by the slave device, the operation channel value for the master device, further perform, by the slave device, the single channel scan on the master device, and finally establish the WiFi P2P connection between the slave device and the master device. The Bluetooth SPP technology provided in the present embodiment can establish a complete communication path between the master device and the slave device. The master device creates the Group operating at 5 GHz, which is capable of establishing the WiFi P2P connection at 5 GHz, such that the WiFi P2P is operated at a higher rate than in the 2.4 GHz frequency band. The use of the timer in single channel scan can perform multiple single channel scans in a short time, so that failure of one single channel scan is avoided. That is, the WiFi P2P connection method provided in the present application can shorten the time for the slave device to scan for the master device, can further improve the probability for the slave device to scan for the master device, and increase the probability for the slave device to scan for the master device, thereby facilitating establishment of the WiFi P2P data connection channel between different devices.

Unless specifically stated otherwise, it should be understood that terms such as "processing" , "calculating", "computing", and "determining" refer to actions and/or processes of a computer or computing system, or similar electronic computing device, that manipulate and/or convert data represented as a physical (e.g., electronic) quantity in a register and/or memory of the computing system or convert these data into other data similarly represented as a physical quantity in a memory or register of the computing system or other such information storage, transmission or display device. The embodiments are not limited in this context. The term "coupled" may be used herein to refer to any type of relationship between the components in question, either directly or indirectly, and may be applied to electrical, mechanical, fluid, optical, electromagnetic, electromechanical or other connections. In addition, the terms "first", "second" and the like are used herein only for ease of discussion, with no specific temporal or chronological meaning, unless otherwise stated.

Finally, it should be illustrated that it will be apparent to those skilled in the art that the present application is not limited to the details of the exemplary embodiments described above, and that the present application can be embodied in other specific forms without departing from the spirit or essential characteristics of the present application. Accordingly, the embodiments are to be considered in all respects as exemplary and nonlimiting. The scope of the present application is defined by the appended claims rather than by the foregoing description, and all changes that come within the meaning and range of equivalency of the claims are therefore intended to be embraced therein. Any reference signs in the claims shall not be construed as limiting the claims to which they relate. Also, it is obvious that the word "comprising" does not rule out other units or steps, and the singular does not rule out the plural. The plurality of units or devices recited in the system claims may also be embodied by one unit or device by software or hardware. Words such as "first", "second", and the like are used to denote names and do not denote any particular order. The application of the present disclosure is not limited to the above-mentioned examples, but may still modify the technical solutions described in the above-mentioned embodiments, or equivalently replace some of the technical features thereof. These modifications or substitutions, however, do not depart from the spirit and scope of the embodiments of the present disclosure. Those skilled in the art will appreciate from the foregoing description that a wide variety of techniques of the various embodiments of the present application may be implemented in various forms. Thus, while the embodiments of the present application have been described in connection with specific examples thereof, the true scope of the embodiments of the present application should not be limited as other modifications will become apparent to the skilled practitioner after studying the drawings, the specification, and the following claims.

## Claims

1. A WiFi P2P connection method, comprising:
receiving an operation channel value for operation of a master device;
performing a single channel scan on the master device based on the received operation channel value, to obtain a scan result; and
establishing a WiFi P2P connection with the master device based on the scan result.

2. The method of claim 1, wherein the receiving of the operation channel value comprises:
receiving an operation channel value for operation of the master device via a Bluetooth SPP technology.

3. The method of claim 2, wherein the receiving of the operation channel value for operation of the master device via the Bluetooth SPP technology comprises:
establishing a Bluetooth SPP channel connection with the master device; and
receiving the operation channel value transmitted by the master device via the Bluetooth SPP channel, wherein the operation channel value is an operation channel value for Group operating at 5 GHz that the master device creates.

4. The method of claim 1, wherein the performing of the single channel scan comprises:
performing a single channel scan on the master device for a preset time range controlled by a timer based on the received operation channel value, to obtain a scan result.

5. The method of claim 4, wherein the performing of the single channel scan on the master device for the preset time range comprises:
starting the timer, wherein the timer is configured to set single channel scan time; and
performing the single channel scan on the master device for the single channel scan time based on the received operation channel value.

6. The method of claim 5, wherein the performing of the single channel scan on the master device for the single channel scan time further comprises:
performing the single channel scan for the single channel scan time based on the received operation channel value and a preset threshold value of the number of single channel scans, wherein every time one of the single channel scans is performed, the number of the single channel scans is incremented by one, and the single channel scan is stopped when the number of the single channel scans reaches the threshold value.

7. The method of claim 5, wherein the performing of the single channel scan on the master device for the single channel scan time further comprises:
performing the single channel scan for the single channel scan time based on the received operation channel value and a preset threshold value of the number of single channel scans, wherein every time one of the single channel scans is performed, the number of the single channel scans is incremented by one, and the single channel scan is stopped when the master device has been scanned for.

8. The method of claim 1, wherein the establishing of the WiFi P2P connection with the master device based on the scan result comprises:
transmitting a WiFi P2P connection request to the master device when the scan result indicates that the master device is searched for; and
confirming the WiFi P2P connection transmitted by the master device to establish the WiFi P2P connection with the master device.

9. The method of claim 1, wherein the establishing of the WiFi P2P connection with the master device based on the scan result comprises:
when the scan result indicates that the master device has not been searched for, returning to the step of performing the single channel scan on the master device based on the received operation channel value to obtain the scan result.

10. A WiFi P2P connection apparatus, comprising:
an operation channel value receiving module for receiving an operation channel value for operation of a master device;
a single channel scan module for performing a single channel scan on the master device based on the received operation channel value, to obtain a scan result; and
a WiFi P2P connection module for establishing a WiFi P2P connection with the master device based on the scan result.

11. The apparatus of claim 10, wherein the single channel scan module comprises:
a timer unit for performing the single channel scan on the master device for a preset time range controlled by a timer based on the received operation channel value, to obtain the scan result.

12. The apparatus of claim 11, wherein the timer unit is configured for:
starting the timer, wherein the timer is configured to set single channel scan time; and
performing the single channel scan on the master device for the single channel scan time based on the received operation channel value.

13. The apparatus of claim 12, wherein the timer unit is configured for:
performing the single channel scan for single channel scan time based on the received operation channel value and a preset threshold value of the number of single channel scans, wherein every time one of the single channel scans is performed, the number of the single channel scans is incremented by one, and the single channel scan is stopped when the number of the single channel scans reaches the threshold value.

14. The apparatus of claim 12, wherein the timer unit is configured for:
performing the single channel scan for single channel scan time based on the received operation channel value and a preset threshold value of the number of single channel scans, wherein every time one of the single channel scans is performed, the number of the single channel scans is incremented by one, and the single channel scan is stopped when the master device has been scanned for.

15. A mobile terminal, comprising: a memory, a processor, and an SPP protocol-based WiFi P2P connection program stored on the memory and operable on the processor, wherein the SPP protocol-based WiFi P2P connection program, when executed by the processor, implements operations comprising:
receiving an operation channel value for operation of a master device;
performing a single channel scan on the master device based on the received operation channel value, to obtain a scan result; and
establishing a WiFi P2P connection with the master device based on the scan result.

16. The apparatus of claim 15, wherein the SPP protocol-based WiFi P2P connection program, when executed by the processor, implements operations comprising:
receiving an operation channel value for operation of the master device via a Bluetooth SPP technology.

17. The apparatus of claim 16, wherein the SPP protocol-based WiFi P2P connection program, when executed by the processor, implements operations comprising:
establishing a Bluetooth SPP channel connection with the master device; and
receiving the operation channel value transmitted by the master device via the Bluetooth SPP channel, wherein the operation channel value is an operation channel value for Group operating at 5 GHz that the master device creates.

18. The apparatus of claim 15, wherein the SPP protocol-based WiFi P2P connection program, when executed by the processor, implements operations comprising:
performing a single channel scan on the master device for a preset time range controlled by a timer based on the received operation channel value, to obtain a scan result.

19. The apparatus of claim 18, wherein the SPP protocol-based WiFi P2P connection program, when executed by the processor, implements operations comprising:
starting the timer, wherein the timer is configured to set single channel scan time; and
performing the single channel scan on the master device for the single channel scan time based on the received operation channel value.

20. A computer-readable storage medium having stored thereon an SPP protocol-based WiFi P2P connection program, wherein the SPP protocol-based WiFi P2P connection program, when executed by a processor, implements the WiFi P2P connection method of any one of claims 1-9.
